# EUROPÄISCHE PATENTSCHRIFT

(11) **EP 1 227 952 B1**
(45) Veröffentlichungstag und Bekanntmachung des Hinweises auf die Patenterteilung: **24.03.2004**
(21) Anmeldenummer: 00969563.6
(22) Anmeldetag: 28.10.2000
(51) Int. Cl.: B60R 7/00, B60R 21/02

(54) **HALTENETZ**
RETAINING NET
FILET DE RETENUE

(30) Priorität: 11.11.1999 DE 29919892 U; 08.12.1999 DE 29921584 U; 10.12.1999 DE 29921657 U; 10.12.1999 DE 29921661 U; 04.08.2000 DE 20013484 U
(43) Veröffentlichungstag der Anmeldung: 07.08.2002
(73) Patentinhaber: Nölle-Pepin GmbH & Co. KG., 58332 Schwelm (DE)
(72) Erfinder: Nölle, Hans, 58332 Schwelm (DE)
(74) Vertreter: Lelgemann, Karl-Heinz, Dipl.-Ing.
(86) Internationale Anmeldenummer: PCT/EP2000/010637
(87) Internationale Veröffentlichungsnummer: WO 2001/034433

(56) Entgegenhaltungen:
- EP-A- 0 221 222
- FR-A- 2 474 976
- FR-A- 2 547 255
- GB-A- 2 033 849
- GB-A- 2 111 439
- GB-A- 2 196 907
- US-A- 4 924 814

## Beschreibung

Die Erfindung bezieht sich auf ein Haltenetz nach dem Oberbegriff des Patentanspruchs 1.

Derartige Haltenetze werden für unterschiedlichste Anforderungsprofile und in unterschiedlichsten Formen erstellt.

Der Erfindung liegt die Aufgabe zugrunde, das vorstehend geschilderte gattungsgemäße Haltenetz wie z.B. aus GB-A-2 196 907 bekannt ist, derart weiterzubilden bzw. auszugestalten, daß es in technisch wenig aufwendiger Weise herstellbar ist, die den jeweiligen Anforderungsprofilen entsprechenden Eigenschaften aufweist und ästhetischen Ansprüchen gerecht wird.

Diese Aufgabe wird erfindungsgemäß durch die in kennzeichnenden Teil des Patentanspruchs 1 angegeben Merkmale gelöst. Durch diese Ausgestaltung läßt sich ein optisch ansprechendes Haltenetz herstellen, wobei die gleichzeitige Herstellung des Netzteils bzw. Netzgeflechts und des angewebten bzw. angehäkelten Randgurts in einem einzigen Arbeitsgang möglich ist.

Wenn das erfindungsgemäße Haltenetz gemäß Patentanspruch 2 ausgebildet ist, kann eine Netzbahn hergestellt werden, die an ihren einander gegenüberliegenden Seiten mit dem Netzteil gleichzeitig hergestellte und mit den jeweiligen Strangenden der Netzstrange verwobene Randgurte aufweist. Diese Netzbahn kann zur Erstellung des gewünschten Haltenetzes zugeschnitten werden, wobei dann an die entstehenden Kanten des Netzteils weitere Randgurte angenäht werden, die aus demselben Werkstoff wie die mit der Netzbahn hergestellten Randgurte ausgebildet sind und die diesen Randgurten optisch entsprechen.

Das erfindungsgemäße Haltenetz bzw. dessen Netzteil und Rand können z.B. aus Polypropylen oder Polyamid ausgebildet werden. Es sind jedoch auch andere geeignete Werkstoffe möglich.

Die Randgurte können in beliebiger Breite ausgestaltet werden, so daß das Netz entsprechend allen denkbaren technischen und ästhetischen Anforderungen ausgebildet werden kann.

Das erfindungsgemäße Haltenetz kann viereckig, trapezförmig, rechteckig oder quadratisch ausgebildet werden. Es sind jedoch auch runde oder vieleckige Ausgestaltungen möglich.

Bei der vorteilhaften Weiterbildung gemäß Patentanspruch 9 wird in einfacher Weise ein Haltenetz erstellt, welches unterschiedlichen Zwecken dienen kann und in einfacher Weise, namlich durch die durch die beiden nicht miteinander verbundenen Randgurte gebildete Öffnung, füll- und entleerbar ist.

Alternativ ist die vorteilhafte Ausgestaltung gemäß Patentanspruch 10 möglich.

Durch die beiden vorstehend geschilderten Ausführungsformen des erfindungsgemäßen Haltenetzes läßt sich aus einer für alle erfindungsgemäßen Haltenetze gemeinsamen Netz-Grundbahn ein erfindungsgemäßes Haltenetz in den gewünschten Abmessungen schaffen.

Gemäß einer weiteren vorteilhaften Ausführungsform hat das erfindungsgemäße Haltenetz vorzugsweise bzw. zumindest an jeder seiner Ecken ein Halte- bzw. Klemmelement, mittels dem es an einer Aufnahmefläche fixierbar ist.

Vorzugsweise sind die Halte- bzw. Klemmelemente zwecks Vereinfachung der Handhabung als Hakenteile ausgebildet.

Gemäß einer zweckmäßigen Weiterbildung des erfindungsgemäßen Hakenteils ist bzw. sind dessen Netzteil und/oder umlaufender Rand elastisch ausgebildet.

Um das erfindungsgemäße Haltenetz so auszugestalten, daß es quasi in beliebigen Abmessungen herstellbar ist, ohne daß die Anforderungen an den zur Herstellung des Haltenetzes eingesetzten Werkstoff mit zunehmenden Haltenetzabmessungen wesentlich erhöht werden müßten, ist die Ausbildung gemäß Patentanspruch 14 vorteilhaft.

Durch den Einsatz von Mittelgurten zwischen den Randgurten des Netzteils ist es möglich, Haltenetze auch mit sehr großen Abmessungen herzustellen, ohne einen höherwertigen Werkstoff einsetzen zu müssen. Eine weitere Erhöhung der mechanischen Widerstandsfähigkeit des erfindungsgemäßen Haltenetzes wird dadurch erzielt, daß sowohl die Rand- als auch die Mittelgurte mit den Netzmaschenfelder des Netzteils ausbildenden Netzsträngen in einem Arbeitsgang hergestellt werden, wobei den jeweiligen Rand- bzw. Mittelgurten zugewandte Strangenden der Netzstränge mit den Rand- bzw. Mittelgurten verwoben werden. Das Netzteil des erfindungsgemäßen Haltenetzes läßt sich in Form von Netzteilbahnen herstellen, wobei dann aus einer solchen Netzteilbahn ein gewünschtes Netzteil in der jeweils erforderlichen Kontur und mit den jeweils erforderlichen Abmessungen ausschneidbar ist. Der Herstellungsvorgang des erfindungsgemäßen Haltenetzes ist dadurch erheblich vereinfacht.

Das Haltenetz gemäß der Erfindung läßt sich zweckmäßigerweise aus Polypropylen oder Polyamid ausbilden, wobei diese Werkstoffe die für das erfindungsgemäße Haltenetz erforderliche Elastizität gewährleisten.

Die Rand- und/oder die Mittelgurte des Netzteils können in beliebiger Breite ausgestaltet werden, so daß neben mechanischen Anforderungen auch ästhetische Wünsche ohne weiteres erfüllt werden können.

Gemäß einer vorteilhaften Ausführungsform des erfindungsgemäßen Haltenetzes weist jeder Mittelgurt zu den ihm benachbarten Rand- und/oder Mittelgurten denselben Abstand auf; es ist jedoch auch moglich, die Abstände zwischen den Mittel- und Randgurten in Abhängigkeit von den zu erwartenden Belastungen des Haltenetzes zu bemessen.

Gemäß einer vorteilhaften Ausführungsform weist das Netzteil des erfindungsgemaßen Haltenetzes drei Mittelgurte auf.

Darüber hinaus können zweckmäßigerweise die Mittel- und Randgurte jeweils dieselbe Breite aufweisen.

Die Netzmaschen des Netzteils des erfindungsgemäßen Haltenetzes können rechteckig, quadratisch, waben- oder rautenförmig ausgestaltet sein.

Um das erfindungsgemäße Haltenetz so zu gestalten, daß es zur Anbringung an einer Befestigungsfläche auf einer Rückseite einer Sitzlehne, an einer Wand- oder Deckenfläche od.dgl. geeignet ist, wird es vorteilhaft gemäß Patentanspruch 21 ausgebildet. Derartige Haltenetze werden für unterschiedliche Anwendungsfälle und in unterschiedlichen Formen erstellt, wobei sie beispielsweise in Verkehrsmitteln, wie Flugzeugen, Eisenbahnen, Schiffen, Kraftfahrzeugen od.dgl., zum Einsatz kommen können.

Das gesamte Netzteil des Haltenetzes einschließlich des die freie Kante bildenden Randgurts kann in einem einzigen Arbeitsgang hergestellt werden. Je nach Ausgestaltung des Haltenetzes kann aus einer in einem Arbeitsvorgang hergestellten Netzbahn ein Netzteil mit den gewünschten Abmessungen herausgeschnitten werden, wobei die freie Kante des Netzteils, d.h. die nicht insgesamt und unmittelbar am Rahmenelement fixierte Kante des Netzteils, durch den in einem Arbeitsgang mit dem Netzteil hergestellten Randgurt gebildet wird.

Vorteilhaft läßt sich das gesamte Netzteil einschließlich des Randgurts aus Polypropylen oder Polyamid ausbilden.

Um jedweden ästhetischen Ansprüchen ohne weiteres genügen zu können ist es zweckmäßig, wenn der die freie Kante des Netzteils ausbildende Randgurt beliebig breit ausgestaltbar ist.

Gemäß einer vorteilhaften Ausführungsform des erfindungsgemäßen Haltenetzes ist der die freie Kante des Netzteils ausbildende Randgurt an seinen beiden Enden am Rahmenelement fixiert, wobei die Fixierung beispielsweise mittels Klammern realisiert werden kann.

Eine optisch ansprechende und technisch einwandfrei funktionsfähige Ausgestaltung des erfindungsgemäßen Haltenetzes wird erreicht, wenn das Rahmenelement eine U-förmige Grundgestalt mit einer Basis und zwei Schenkeln aufweist, wobei der die freie Kante des Netzteils bildende Randgurt dann zwischen den freien Enden der beiden Schenkel des Rahmenelements verläuft.

Um unnötige Spannungen im Rahmenelement auszuschließen ist es vorteilhaft, wenn die Kontur des Rahmenelements an die der es aufnehmenden Befestigungsfläche angepaßt ist.

Die Anbringung des Netzteils am Rahmenelement läßt sich in technisch wenig aufwendiger Weise gemäß Patentanspruch 28 erreichen.

Die Anbringung des Kantenelements am Rahmenelement einerseits und am Netzteil andererseits wird gemäß Patentanspruch 29 mit vergleichsweise geringen Aufwand bewerkstelligt.

Mittels einer vorteilhaften Ausgestaltung des erfindungsgemäßen Haltenetzes gemäß Patentanspruch 30 können zeitweise nicht benötigte Gegenstände einerseits sicher und andererseits zugriffsbereit z.B. an der Sonnen- bzw. Lichtblende eines Kraftfahrzeugs gehaltert werden. Aufgrund der Elastizität einer derartigen Halteschleife sowohl in ihrer Umfangsrichtung als auch in ihrer zur Umfangsrichtung senkrechten Axialrichtung können unterschiedlichst konfigurierte Gegenstände mittels der Halteschleife z.B. an der Sonnen- bzw. Lichtblende eines Kraftfahrzeugs befestigt werden. Die Gegenstände bleiben für einen Fahrer oder Beifahrer ohne weiteres zugriffsbereit, wobei darüber hinaus aufgrund der Ausgestaltung des Mittelteils der Halteschleife als Netzteil die mittels der Halteschleife gehalterten Gegenstände weitestgehend sichtbar bleiben. Des weiteren ist die erfindungsgemäß ausgestaltete Halteschleife transportabel und aufgrund ihrer elastischen Ausgestaltung in Verbindung mit mit unterschiedlichen Querschnitten versehenen Körpern nutzbar. Das Netzteil und die Randgurte der erfindungsgemäßen Halteschleife können in einem einzigen integrierten Arbeitsschritt in einer Endlosbahn hergestellt werden, die durch entsprechend den gewünschten Abmessungen durchgeführte Schnitte beliebig aufteilbar ist.

Eine Vereinfachung der Herstellung der erfindungsgemäßen Halteschleite wird gemäß Patentanspruch 31 erzielt. Bei dieser vorteilhaften Ausführungsform können das Netzteil und die beiden an seinen Längsseiten verlaufenden Randgurte in Form einer Bahn vorliegen, wobei dann die beiden Stirnseiten der Bahn mittels des Verbindungsglieds miteinander verbunden werden können. Eine derartige, das Netzteil und die beiden Randgurte aufweisende Bahn kann in beliebigen Längenabschnitten geschnitten werden, so daß Halteschleifen in jeder gewünschten Länge ohne weiteres hergestellt werden können. Die Strangscharen, die das Netzteil ausbilden, können so orientiert sein, daß sie quadratische, rechteckige, waben- oder rautenförmige Netzmaschen ausbilden.

Zur weiteren Reduzierung des herstellungstechnischen Aufwands der Halteschleife ist es zweckmäßig, wenn sowohl das Netzteil und die beiden Randgurte als auch das Verbindungsglied aus demselben Werkstoff hergestellt sind, wobei sich Polypropylen und Polyamid als besonders geeignete Werkstoffe herausgestellt haben. Durch diese werkstoffmäßige Ausgestaltung läßt sich auch ein angenehmer ästhetischer Gesamteindruck der erfindungsgemäßen Halteschleife erzielen.

Die Randgurte der Halteschleife können beliebig breit ausgestaltet werden, wobei aus ästhetischen Gründen sehr häufig jedoch eine Ausgestaltung gewählt wird, bei der beide Randgurte gleich breit sind.

Gemäß einer vorteilhaften Ausführungsform der erfindungsgemäßen Halteschleife ist das Verbindungsglied an seinen beiden den Stirnenden des Netzteils und der Randgurte zugewandten Seiten mit den diesen zugewandten Strangenden der Netzstränge der Strangscharen und den Stirnenden der Randgurte vernäht.

Zur Verbesserung des ästhetischen Gesamteindrucks der erfindungsgemäßen Halteschleife ist es vorteilhaft, wenn die Außenränder des Verbindungsglieds mit den Außenrändern der Randgurte fluchten.

Zweckmäßigerweise kann das Verbindungsglied als Gurtband ausgebildet sein.

Gemäß einer weiteren vorteilhaften Ausgestaltung nach Patentanspruch 39 können kleinere Gegenstände unterschiedlichen Durchmessers sicher und zugriffsbereit auf der Außenseite der Halteschleife fixiert werden.

Hierzu weist das Halteelement vorteilhaft Klettbandfelder auf, die in einer Vielzahl von Schließstellungen miteinander in Eingriff bringbar sind.

Bei einer Weiterbildung des erfindungsgemäßen Haltenetzes gemäß Patentanspruch 41 wird die Möglichkeit geboten, durch Einschieben eines Stabes od.dgl. den betreffenden Teil des Randes des Haltenetzes zu versteifen. Im Gegensatz zu bekannten, mit einem als Hohlschlauch ausgebildeten Randgurt versehenen Haltenetzen, bei denen die hohlschlauchförmige Ausgestaltung des Randgurts erzielt wird, indem ein am Netzgeflecht bzw. an dessen dem betreffenden Randabschnitt zugeordneten Netzsträngen befestigter, vergleichsweise breiter Streifen umgefaltet wird, wonach der noch streifenförmige Randgurt an seinen in Übereinanderlage gebrachten Randkanten durch eine Naht zu dem Hohlschlauch verbunden wird, wodurch die Herstellung eines mit einem derartigen Randgurt versehenen Haltenetzes vergleichsweise aufwendig ist, da zunächst das Netzgeflecht und der streifenförmige Randgurt hergestellt werden, der streifenförmige Randgurt mit dem Netzgeflecht verbunden wird und danach die beschriebene Umgestalturig des streirenförmigen Randgurts zum als Hohlschlauch ausgebildeten Randgurt erfolgt, wird bei dem entsprechend weitergebildeten erfindungsgemäßen Haltenetz der als Hohlschlauch ausgebildete Randgurt des Haltenetzes aus demselben werkstoff wie das Netzgeflecht ausgebildet und als Hohlschlauch an ihm zugeordnete Strangenden der Netzstränge der Stranascharen des Netzgeflechts angewebt bzw. angehäkelt. Bei dieser erfindungsgemäßen Ausgestaltung des Haltenetzes ist es möglich, dieses Haltenetz einschließlich seines Netzgeflechts und des sich zumindest über einen Teil des Rands des Netzgeflechts erstreckenden Randgurts, bereits in Hohlschlauchform, in einem einzigen Arbeitsgang herzustellen. Die nachträgliche Herstellung von Nähten od.dgl. kann vollständig entfallen.

Wenn ein derart gestaltetes erfindungsgemäßes Haltenetz an einem etwa geradlinigen Randabschnitt einen als Hohlschlauch ausgebildeten Randgurt aufweist, in den ein Metallstab od.dgl. eingeschoben ist, und wenn das Haltenetz an seinem nicht mit dem Randgurt versehenen Außenrand an der Innenseite einer Fahrzeugtür befestigt ist, ist es möglich, die Fahrzeugtür zu schließen, indem der den Metallstab od.dgl. enthaltende Randgurt des Haltenetzes erfaßt und in Richtung auf das Fahrzeuginnere gezogen wird. Zwar sind an der Innenseite der Fahrzeugtür üblicherweise Griffe od.dgl. vorgesehen, um derartige Schließvorgänge durchzuführen, jedoch kommt es aus Unachtsamkeit oder aus anderen Gründen vergleichsweise häufig vor, daß zwecks Schließung der Tür beispielsweise in ein Haltenetz eingegriffen wird. Bei der erfindungsgemäßen Ausgestaltung des Haltenetzes führt ein derartiges, an sich nicht erwünschtes Vorgehen nicht zu Beschädigungen des Haltenetzes oder der Fahrzeugtür. Förderlich hierfür ist, wenn der im Hohlschlauch angeordnete Metallstab od.dgl. an einem Endabschnitt ein Langloch aufweist, welches in Längsrichtung des Metallstabs od.dgl. verschieblich mit einem Haltebolzen in Eingriff ist, der seinerseits in geeigneter Form an der Innenseite der Fahrzeugtür befestigt ist.

Alternativ ist es möglich, daß der im Hohlschlauch angeordnere Metallstab od.dgl. an zumindest einem Ende, vorzugsweise an beiden Enden, mittels einer in Schließrichtung des Haltenetzes vorgespannten Feder mit der Innenseite der Fahrzeugtür verbunden ist.

Um die Haltefunktion des erfindungsgemäßen Haltenetzes bei dem Anwendungsfall zu verbessern, bei dem mittels einer anderen Ausführungsform des Haltenetzes Gepäckstücke auf der für diese vorgesehenen Aufnahmefläche fixiert werden sollen, wobei sich diese Aufnahmefläche beispielsweise im Kofferraum oder auf der Ladefläche eines Fahrzeugs befinden kann, ist die Weiterbildung gemäß Patentanspruch 45 vorteilhaft. Die Randkontur des Haltenetzes kann in beliebiger Weise ausgestaltet sein. Mittels des in dem entsprechend der Randkontur des Haltenetzes verlaufenden Randgurt angeordneten ein- oder mehrteiligen Stabes wird eine Verstarrung des Randes des Haltenetzes erreicht, mittels der verhindert wird, daß zwischen der zur Aufnahme der Gepäckstücke vorgesehenen Aufnahmefläche und dem Rand des Haltenetzes Lücken entstehen, durch die hindurch ein Verschieben der Gepäckstücke erfolgen könnte.

Bei dem erfindungsgemäßen Haltenetz können sämtliche Rand- bzw. Mittelgurte und das Netzteil bzw. Netzgeflecht aus einem elastischen Werkstoff ausgebildet sein.

Bei einem erfindungsgemäßen Verfahren zur Herstellung eines vorstehend näher angegebenen Haltenetzes wird der den Rand des Haltenetzes zumindest teilweise ausbildende Randgurt aus demselben Werkstoff wie das Netzteil bzw. Netzgeflecht hergestellt und an ihm zugeordnete Strangenden der Strangscharen angewebt bzw. angehäkelt. Hierdurch läßt sich der Aufwand bei der Herstellung derartiger Haltenetze erheblich reduzieren.

Im folgenden wird die Erfindung an Hand von Ausführungsformen unter Bezugnahme auf die Zeichnung näher erläutert.

Es zeigen:
- Figur 1: eine erste Ausführungsform eines erfindungsgemäßen Haltenetzes;
- Figur 2: eine Vorform einer zweiten Ausführungsform des erfindungsgemäßen Haltenetzes;
- Figur 3: eine Vorform einer dritten Ausführungsform des erfindungsgemäßen Haltenetzes;
- Figur 4: eine vierte Ausführungsform des erfindungsgemäßen Haltenetzes;
- Figur 5: eine Ausführungsform eines als Halteschleife ausgebildeten erfindungsgemäßen Haltenetzes in abgewickelter Darstellung;
- Figur 6: eine Seitenansicht eines mittels eines Verbindungsglieds ausgestalteten Abschnitts der in Figur 5 dargestellten Halteschleife;
- Figur: 7 eine Teildarstellung einer weiteren Ausführungsform des erfindungsgemäßen Haltenetzes; und
- Figur 8: den Schnitt A - A in Figur 7.

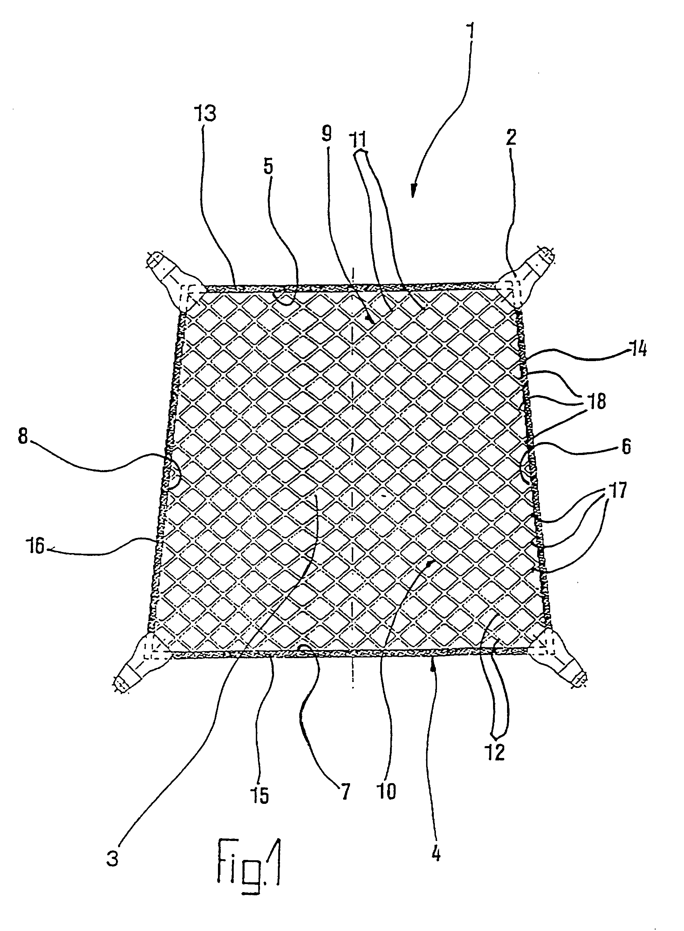

Figur 1 zeigt eine erste Ausführungsform eines erfindungsgemäßen Haltenetzes 1. Ein solches Haltenetz 1 kann beispielsweise als Bodennetz ausgebildet sein, welches in einem Kraftfahrzeug zwecks fixierter Halterung von Gegenständen am Boden desselben zum Einsatz kommen kann.

Hierzu weist das Haltenetz 1 an seinen Ecken Halte- bzw. Klemmelemente 2 auf, mittels denen es an geeigneten Befestigungspunkten am Boden des Kraftfahrzeugs anbringbar ist.

Das Haltenetz 1 hat ein Netzteil 3 und einen umlaufenden Rand 4, der das Netzteil 3 an dessen Kanten 5, 6, 7, 8 begrenzt.

Im dargestellten Ausführungsbeispiel ist das Haltenetz 1 bzw. das Netzteil 3 trapezförmig ausgebildet; grundsätzlich kann das Haltenetz 1 bzw. das Netzteil 3 jede gewünschte Konfiguration aufweisen, wobei jedoch zwei zueinander parallele Kanten des Netzteils 3, im dargestellten Ausführungsbeispiel die Kanten 5 und 7, vorgegeben sind.

Das Netzteil 3 hat im dargestellten Ausführungsbeispiel zwei zueinander im rechten Winkel geneigt verlaufende Strangscharen 9, 10. Die Strangscharen 9 bzw. 10 bestehen jeweils aus einer Vielzahl zueinander paralleler Netzstränge 11 bzw. 12.

Der umlaufende Rand 4 weist im dargestellten Ausführungsbeispiel vier Randgurte 13, 14, 15, 16 auf, die den Kanten 5, 6, 7, 8 des Netzteils 3 zugeordnet sind.

Der Randgurt 13 an der in Figur 1 oberen Kante 5 des Netzteils 3 verläuft parallel zum Randgurt 15, der an der unteren Kante 7 des Netzteils 3 angeordnet ist. Die beiden Randgurte 13, 15 sind aus demselben Werkstoff wie das Netzteil 3 ausgebildet, wobei es sich bei diesem Werkstoff z.B. um Polypropylen oder Polyamid handeln kann.

Des weiteren sind die Randgurte 13 und 15 an die obere Kante 5 bzw. die untere Kante 7 des Netzteils 3 ausbildende Strangenden 17, 18 der Strangscharen 9, 10 des Netzteils angewebt. Es ist somit möglich, die Randgurte 13 und 15 des Haltenetzes 1 gemeinsam mit dem Netzteil 3 desselben in einem Arbeitsgang herzustellen.

An den beiden seitlichen Kanten 6, 8 des Netzteils 3 sind die dort vorgesehenen Randgurte 14 und 16 mit den Strangenden 17, 18 der Strangscharen 9, 10 vernäht. Die Randgurte 14, 16 bestehen ebenfalls aus demselben Werkstoff wie das Netzteil 3.

Jeder Randgurt 13, 14, 15, 16 ist an seinen Enden mit den ihm zugewandten Enden ihm benachbarter Randgurte verbunden.

Die Randgurte 13, 14, 15, 16 können beliebig breit ausgestaltet werden, so daß für jeden denkbaren Anwendungsfall ein geeigneter Rand 4 für das jeweilige Netzteil 3 ausgebildet werden kann.

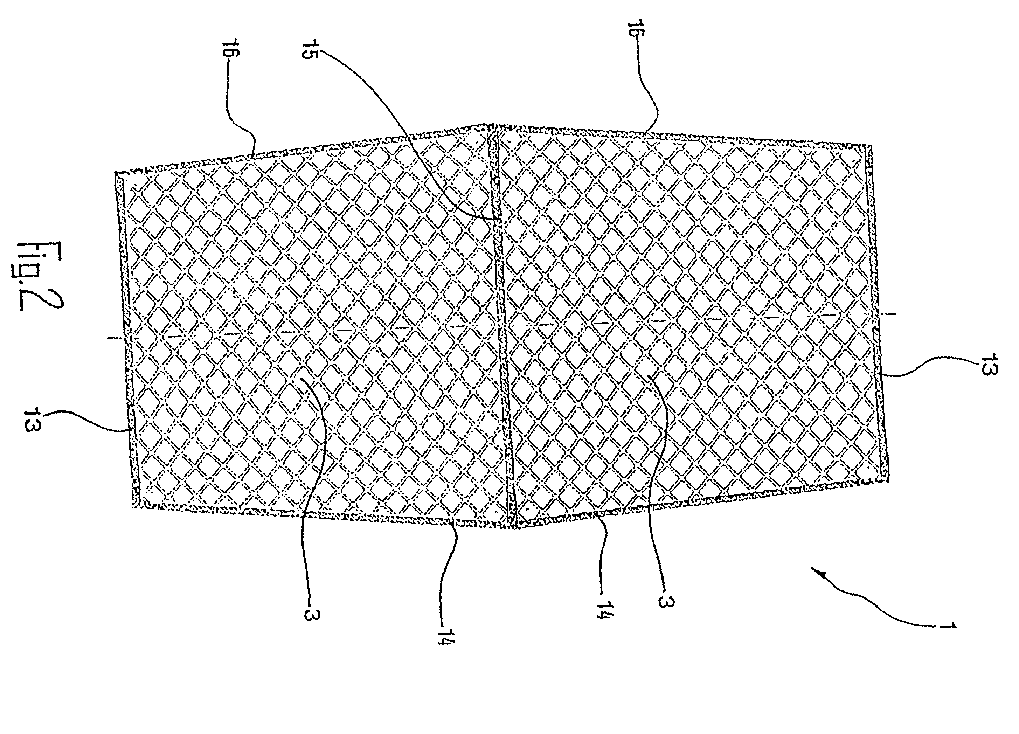

In Figur 2 ist eine Vorform einer weiteren Ausführungsform eines erfindungsgemäßen Haltenetzes 1 dargestellt. Von der in Figur 1 dargestellten Ausführungsform unterscheidet sich das in Figur 2 dargestellte Haltenetz dadurch, daß zu ihm zwei Netzteile 3 gehören, die an einer Kante über einen ihnen gemeinsamen Randgurt 15 miteinander verbunden sind. Die beiden Netzteile 3 sind zueinander symmetrisch in bezug auf den ihnen gemeinsamen Randgurt 15 ausgebildet.

Durch Umklappen des in Figur 2 unteren Netzteils 3 um den den beiden Netzteilen 3 gemeinsamen Randgurt 15 geraten die weiteren Randgurte 13, 14 und 16 des unteren Netzteils 3 mit den entsprechenden Randgurten 13, 14, 16 des oberen Netzteils 3 in Übereinanderlage. Durch Verbinden der beiden Randgurte 14 und der beiden Randgurte 16 der nunmehr übereinander angeordneten beiden Netzteile 3 kann ein Haltenetz geschaffen werden, das durch eine Öffnung zwischen den beiden Randgurten 13 der beiden Netzteile 3, die nicht miteinander verbunden sind, gefüllt bzw. entleert werden kann.

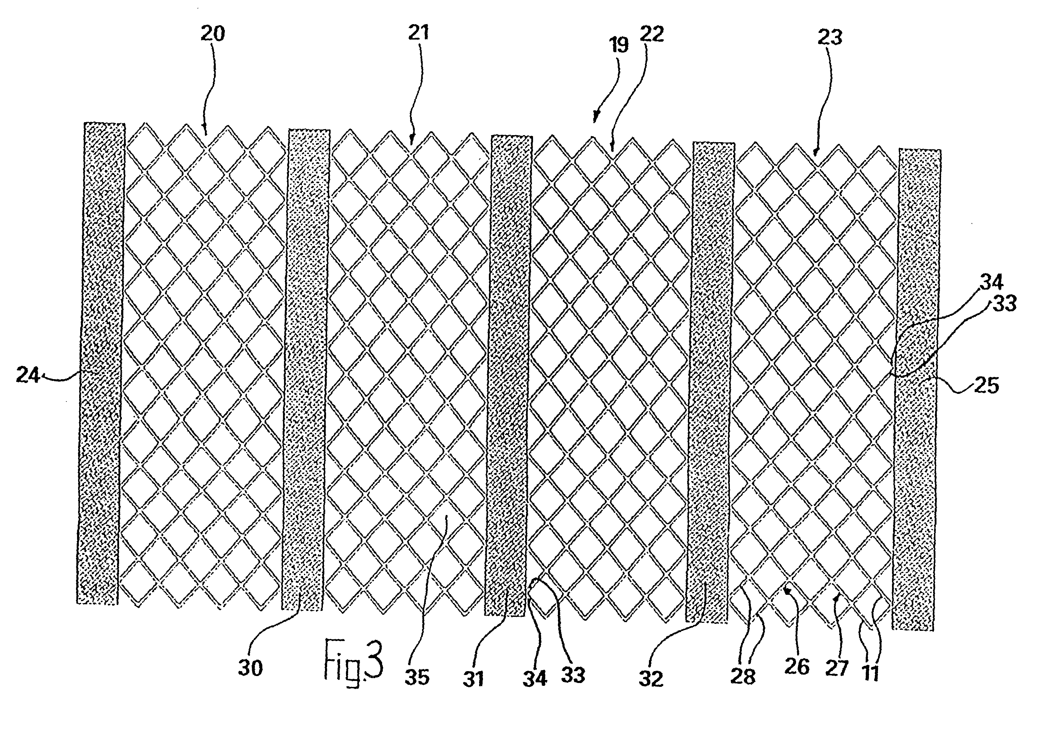

Ein in Figur 3 dargestelltes Netzteil 19 hat in der dort dargestellten Ausführungsform vier Netzmaschenfelder 20, 21, 22, 23, die nebeneinander angeordnet sind. Die beiden in Figur 3 äußeren Netzmaschenfelder 20 und 23 weisen an ihrer Außenseite jeweils einen Randgurt 24 bzw. 25 auf. Die beiden Randgurte 24, 25 sind gleich breit ausgebildet und sind aus demselben Werkstoff hergestellt wie die Netzmaschenfelder 20, 21, 22, 23 ausbildende Strangscharen 26, 27, die im dargestellten Ausführungsbeispiel in einem Winkel zueinander geneigt verlaufen und jeweils eine Vielzahl zueinander paralleler Netzstränge 28 bzw. 29 aufweisen.

Zwischen den Netzmaschenfeldern 20, 21, 22, 23 des in Figur 3 dargestellten Netzteils 19 verlaufen Mitteigurte 30, 31, 32, die parallel zu den beiden Randgurten 24, 25 angeordnet sind und untereinander bzw. zu den Randgurten 24, 25 den gleichen Abstand aufweisen.

Des weiteren weisen die Randgurte 24, 25 sowie die Mittelgurte 30, 31, 32 jeweils dieselbe Breite auf.

Wie die Randgurte 24, 25 sind auch die Mittelgurte 30, 31, 32 aus demselben Werkstoff wie das übrige Netzteil 19 hergestellt, bei dem es sich z.B. um Polypropylen oder Polyamid handeln kann. Die Randgurte 24, 25 und die Mittelgurte 30, 31, 32 sind an ihnen zugeordnete Strangenden 33, 34 der Netzstränge 28, 29 der Strangscharen 26, 27 angewebt. Die Erstellung des in Figur 3 dargestellten Netzteils 19 erfolgt in einem Arbeitsgang, wobei eine Netzbahn erstellt wird, aus der Netzteile 19 in der jeweils gewünschten Abmessung herstellbar sind.

Die Randgurte 24, 25, sowie die Mittelgurte 30, 31, 32 können in beliebiger Breite erstellt werden.

Die Netzmaschen 35 weisen bei der in Figur 3 dargestellten Ausführungsform des Netzteils 19 Rautenform auf. Es ist jedoch auch möglich, die Netzmaschen 35 rechteckig, quadratisch, wabenförmig oder ähnlich auszubilden.

Die Mittelgurte 30, 31, 32 verschaffen dem Netzteil 19 eine große Stabilität und Widerstandskraft, so daß Netzteile 19 mit im Vergleich zum Stand der Technik erheblich vergrößerten Abmessungen hergestellt werden können, die gleichwohl den an sie gestellten mechanischen Anforderungen in jeder Weise genügen.

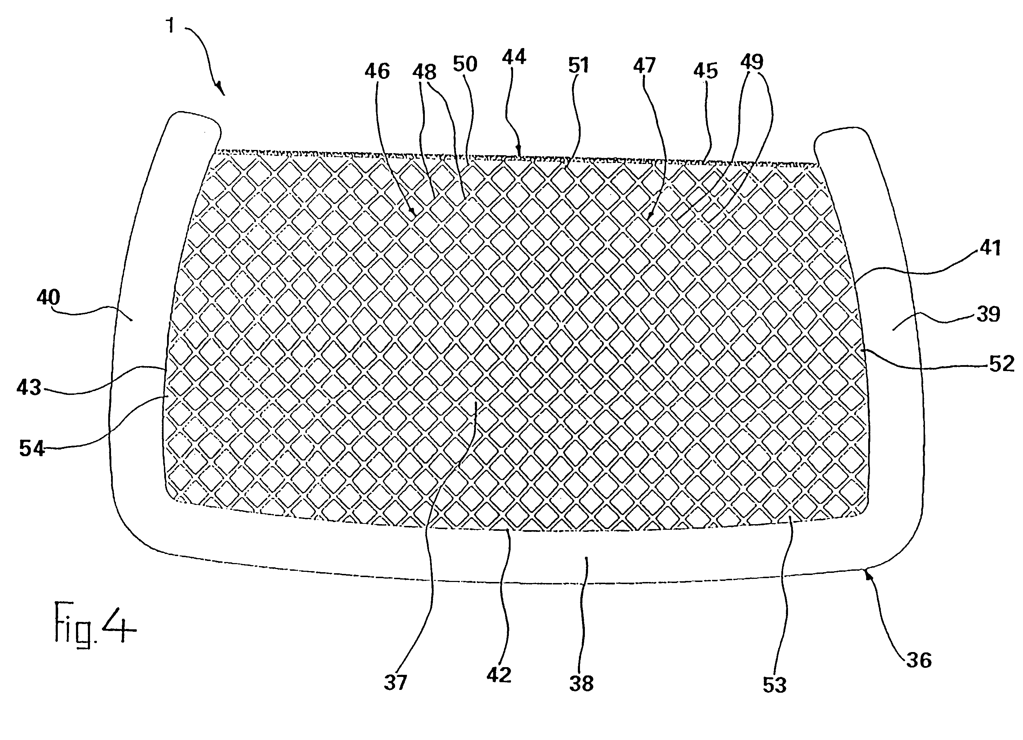

Ein in Figur 4 gezeigtes Haltenetz 1 hat ein vergleichsweise starres Rahmenelement 36 und ein elastisches Netzteil 37.

Das Haltenetz 1 wird üblicherweise an einer in Figur 4 nicht dargestellten Befestigungsfläche angebracht, bei der es sich z.B. um eine Rückseite einer Sitzlehne, eine Wand- oder Dekkenfläche od.dgl, handeln kann.

Das vergleichsweise starre Rahmenelement 36 ist U-förmig ausgebildet und hat eine Basis 38, von deren Enden sich jeweils ein Schenkel 39 bzw. 40 in Vertikalrichtung etwa aufwärts erstreckt.

Die Anbringung des Rahmenelements 36 an der Befestigungsfläche erfolgt mittels üblicher Befestigungstechniken.

Das Netzteil 37 des Haltenetzes 1 erstreckt sich zwischen der Basis 38 und den Schenkeln 39, 40 des Rahmenelements 36 und ist an seinen den beiden Schenkeln 39, 40 und der Basis 38 zugeordneten Kanten 41, 42, 43 am Rahmenelement 36 fixiert.

An seiner sich zwischen den freien Enden der Schenkel 39, 40 des Rahmenelements 36 erstreckenden freien Kante 44 weist das Netzteil 37 einen Randgurt 45 auf, der in geeigneter Weise, z.B. mittels Klammern, an seinen beiden Enden an den freien Enden der Schenkel 39 bzw. 40 fixiert ist.

Der Randgurt 45 ist aus demselben Werkstoff wie das übrige Netzteil 37 ausgebildet.

In Figur 4 ist das Haltenetz 1 bzw. das Netzteil 37 in etwa rechteckförmig ausgebildet; grundsätzlich können das Haltenetz 1 und damit das Rahmenelement 36 und das Netzteil 37 jede gewünschte Konfiguration aufweisen, wobei jedoch das Netzteil 37 die freie Kante 44 bzw. den die freie Kante 44 bildenden Randgurt 45 aufzuweisen hat.

Das Netzteil 37 hat im in Figur 4 dargestellten Ausführungsbeispiel zwei zueinander im rechten Winkel geneigt verlaufende Strangscharen 46, 47. Die Strangscharen 46 bzw. 47 bestehen jeweils aus einer Vielzahl zueinander paralleler Netzstränge 48 bzw. 49.

Der die freie Kante 44 des Netzteils 37 bildende Randgurt 45 verläuft parallel zur Basis 48 des Rahmenelements 36 des Haltenetzes 1 zwischen den freien Enden der Schenkel 39, 40 des Rahmenelements 36. Der Randgurt 45 ist, wie oben bereits erwähnt, aus demselben Werkstoff wie das übrige Netzteil 37 ausgebildet, wobei es sich bei diesem Werkstoff z.B. um Propylen oder Polyamid handeln kann.

Außerdem ist der die freie Kante 44 des Netzteils 37 bildende Randgurt 45 an der freien Kante 44 des Netzteils 37 zugeordnete Strangenden 50, 51 der Strangscharen 46, 47 des Netzteils 37 angewebt. Hierdurch ist es möglich, den Randgurt 45 des Netzteils 37 gemeinsam mit dem übrigen Netzteil 37 in einem Arbeitsgang herzustellen. Der Randgurt 45 kann in der genannten Weise in jeder gewünschten Breite gestaltet werden.

Die Kontur der Basis 38 sowie der Schenkel 39, 40 des Rahmenelements 36 ist an diejenige der das Haltenetz 1 aufnehmenden Befestigungsfläche anpaßbar.

Die Fixierung der dem Rahmenelement 36 zugeordneten Kanten 41, 42, 43 des Netzteils 37 erfolgt in einer hierfür geeigneten Art und Weise. Beispielsweise kann durch die an der betreffenden Kante 41, 42 bzw. 43 angeordneten Randmaschen 52, 53, 54 des Netzteils 37 ein in Figur 4 nicht dargestelltes Kantenelement in Form eines gebogenen Drahtes, Stabes, Bandes od.dgl. verlaufen, wobei das Kantenelement wiederum seinerseits am Rahmenelement 36 fixiert ist. Die Fixierung dieses Kantenelements am Rahmenelement 36 kann beispielsweise mittels Clipsaufnahmen erfolgen, in die das Kantenelement einklemmbar ist.

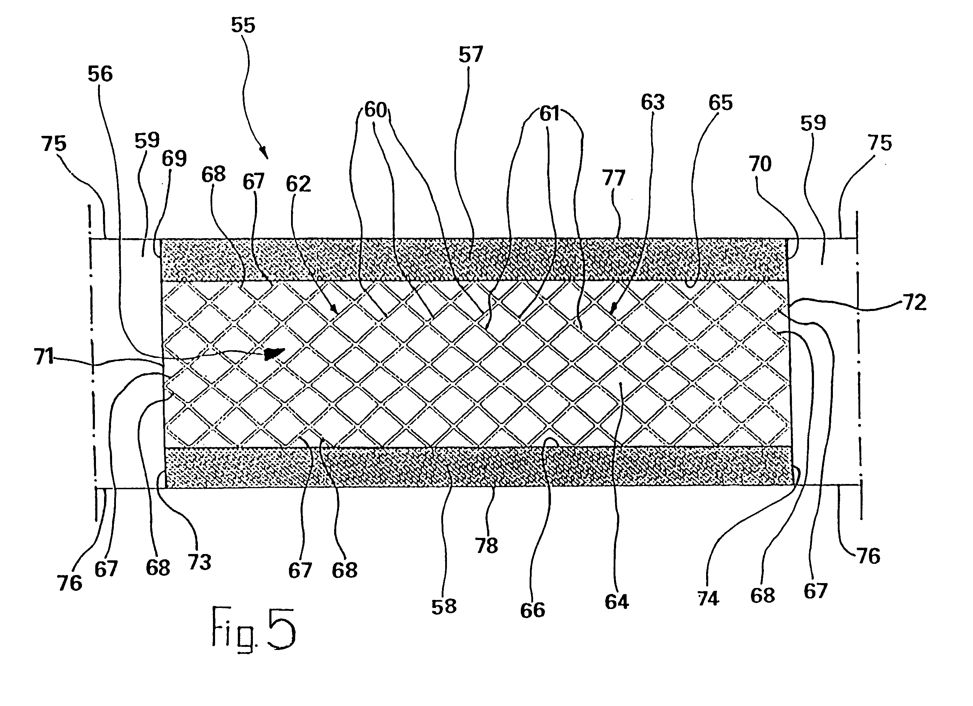

Ein in Figur 5 aus Gründen der Übersichtlichkeit im abgewikkelten Zustand dargestelltes als Halteschleife 55 ausgebildetes erfindungsgemäßes Haltenetz ist insgesamt elastisch ausgebildet und kann auf einen in den Figuren nicht dargestellten stab-, stangen-, walzenförmigen oder ähnlich gestalteten Körper aufgezogen werden; insbesondere ist die Halteschleife 55 dazu geeignet, auf eine schwenkbare Sonnen- oder Lichtblende eines Kraftfahrzeugs aufgezogen zu werden. Aufgrund ihrer elastischen Ausgestaltung und ihrer Abmessungen umgibt die Halteschleife 55 dann den jeweiligen Gegenstand mit einer bestimmten Vorspannung.

Die Halteschleife 55 wird zum Fixieren von unterschiedlichsten Gegenständen genutzt, z.B. von Schreibutensilien, Mautkarten, Handys, Funksendern, Lebensmitteln od.dgl. Aufgrund der Vorspannung der Halteschleife können die genannten Gegen-. stände sicher z.B. an der Sonnen- oder Lichtblende eines Kraftfahrzeugs gehaltert werden.

Die Halteschleife 55 besteht in der in Figur 5 dargestellten Ausführungsform im wesentlichen aus einem Netzteil 56, einem in Figur 5 oberen Randgurt 57, einem in Figur 5 unteren Randgurt 58 und einem in Figur 5 in zwei Bestandteilen dargestellten einstückigen Verbindungsglied 59. Die in Figur 5 zweiteilige Darstellung des Verbindungsglieds 59 ergibt sich aus der Darstellung der Halteschleife 55 im abgewickelten Zustand.

Das Netzteil 56 der Halteschleife 55 wird durch zwei zueinander geneigt verlaufende, jeweils mehrere Netzstränge 60, 61 aufweisende Strangscharen 62, 63 gebildet. Die Strangscharen 62, 63 bzw. deren Netzstränge 60, 61 bilden im in Figur 5 dargestellten Ausführungsbeispiel rautenförmige Netzmaschen 64; grundsätzlich sind auch quadratische, rechteckige oder wabenförmige Netzmaschen denkbar.

An den beiden Längsseiten des Netzteils 56 erstrecken sich der obere Randgurt 57 und der untere Randgurt 58. Die beiden Randgurte 57, 58 haben dieselben Längsabmessungen wie das Netzteil 56; beide Randgurte 57, 58 weisen dieselbe Breite auf. An ihren Innenrändern 65 bzw. 66 sind der obere Randgurt 57 und der untere Randgurt 58 an Strangenden 67, 68 der Netzstränge 60, 61 der Strangscharen 62, 63 des Netzteils 56 angewebt.

Das Netzteil 56 und die beiden Randgurte 57, 58 werden in einem Arbeitsgang hergestellt. Näharbeiten od.dgl. zur Anbringung der Randgurte 57, 58 am Netzteil 56 entfallen. Das Netzteil 56 und die beiden Randgurte 57, 58 sind aus demselben Werkstoff hergestellt, bei dem es sich z.B. um Polypropylen oder Polyamid handeln kann. Je nach ästhetischen oder auch technischen Anforderungen können die beiden Randgurte 57, 58 und auch das Netzteil 56 quasi beliebig breit ausgestaltet werden.

Bei dem in Figur 5 dargestellten Ausführungsbeispiel der Halteschleife 55 sind der obere Randgurt 57 an seinen beiden Stirnenden 69, 70 das Netzteil 56 an seinen beiden Stirnenden 71, 72 und der untere Randgurt 58 an seinen beiden Stirnenden 73, 74 mit dem Verbindungsglied 59 verbunden. Das Verbindungsglied 59 kann z.B. als Gurtband ausgebildet sein, wobei dieses Gurtband 59 dann ebenfalls aus demselben Werkstoff hergestellt ist wie das Netzteil 56, der obere Randgurt 57 und der untere Randgurt 58.

Zur Ausgestaltung der Verbindung der jeweiligen Stirnenden 69, 70, 71, 72, 73 und 74 des oberen Randgurts 57, des Netzteils 56 bzw. des unteren Randgurts 58 ist das Verbindungsglied bzw. Gurtband 59 an seinen beiden den Stirnenden 71, 72 des Netzteils 56 und denjenigen 69, 70, 73, 74 der Randgurte 57, 58 zugewandten Seiten mit den diesen Seiten zugewandten Strangenden 67, 68 der Netzstränge 60, 61 des Netzteils 56 und den Stirnenden 69, 70 bzw. 73, 74 des oberen bzw. unteren Randgurts 57 bzw. 58 vernäht.

Der in Figur 5 obere Außenrand 75 und der in Figur 5 untere Außenrand 76 des Verbindungsglieds bzw. Gurtbands 59 fluchtet mit dem Außenrand 77 des oberen Randgurts 57 bzw. dem Außenrand 78 des unteren Randgurts 58.

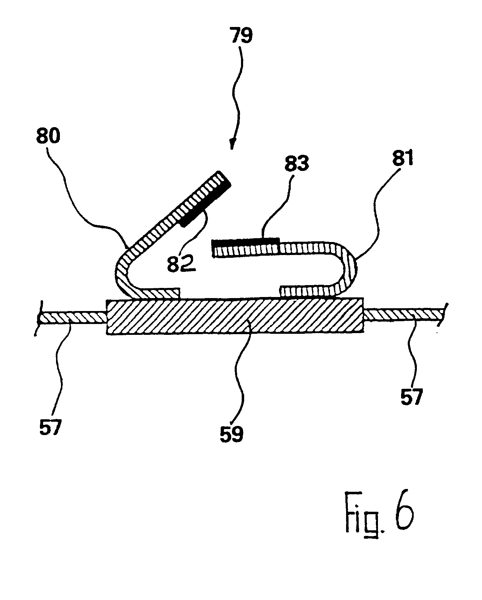

Wie sich aus Figur 6 ergibt, ist auf die Außenfläche bzw. Außenseite des Verbindungsglieds bzw. Gurtbands 59 ein Halteelement 79 aufgebracht bzw. aufgenäht. Dieses Halteelement 79 hat zwei mit einem Ende an die Außenfläche des Gurtbands 59 befestigte Streifen 80, 81, die mit ihren freien Endabschnitten in eine einander überlappende Position bringbar sind und die auf dort einander zugewandten Flächen jeweils ein Klettbandfeld 82, 83 aufweisen. Entsprechend sind die Streifen 80, 81 durch Herstellung eines Eingriffs zwischen den beiderseitigen Klettbandfeldern 82, 83 in beliebigen Schließstellungen fest miteinander verbindbar, so daß mittels des Halteelements 79 unterschiedlich bemessene Gegenstände, z.B. Kugelschreiber, Feuerzeuge, Filme od.dgl., am Verbindungsglied bzw. Gurtbaad 59 der Halteschleife 55 fixierbar sind.

Aufgrund der Elastizität der Halteschleife 55 können unterschiedlichste Gegenstände mittels der Halteschleife 55 an den stab-, stangen-, walzenförmigen oder ähnlich gestalteten Körper, der in den Figuren nicht dargestellt ist, angeklemmt werden. Da die Elastizität der Halteschleife 55 sowohl in deren Umfangsrichtung als auch in deren Axialrichtung, d.h. senkrecht zu den Randgurten 57, 58 sehr groß ist, können auch vergleichsweise breite Gegenstände mittels der Halteschleife 55 sicher gehaltert werden. Darüber hinaus bleiben die mittels der Halteschleife 55 an den vorstehend erwähnten Körper angeklemmten Gegenstände weitestgehend sichtbar, da sie zumindest teilweise zwischen dem Netzteil 56 der Halteschleife 55 und dem genannten Körper fixiert sind und das Netzteil 56 weitestgehend durchsichtig ist.

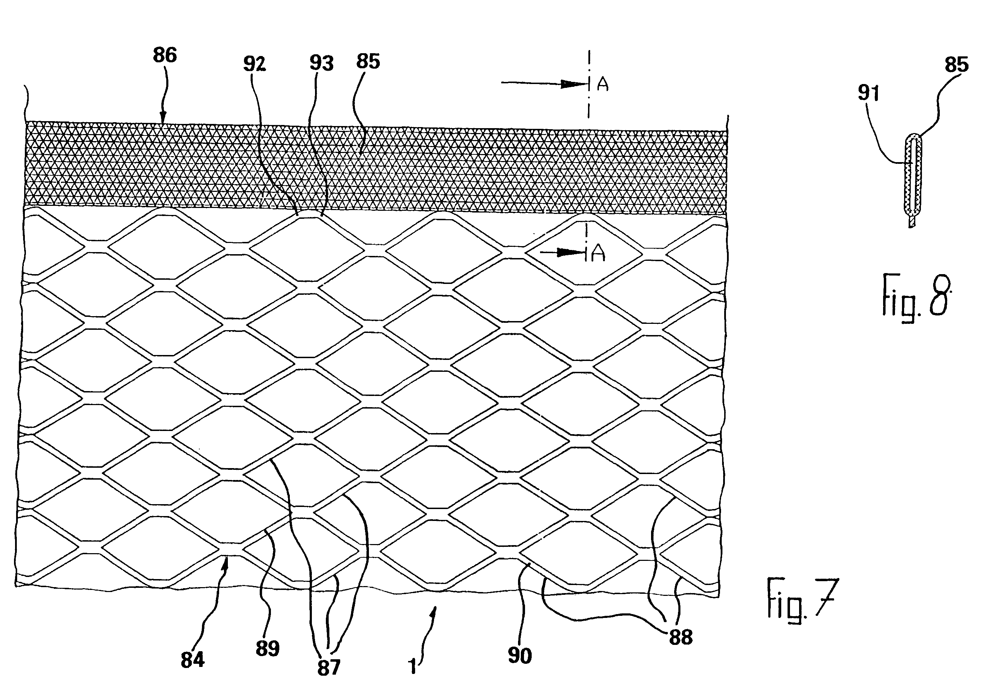

Ein in den Figuren 7 und 8 gezeigtes erfindungsgemäßes Haltenetz 1 besitzt ein vorzugsweise elastisches Netzgeflecht 84 und einen Randgurt 85, der zumindest teilweise den Rand 86 des Haltenetzes 1 bildet.

Das Netzgeflecht 86 des Haltenetzes 1 hat, wie insbesondere aus Figur 7 hervorgeht, zwei zueinander im rechten Winkel geneigt verlaufende Strangscharen 87, 88. Die Strangscharen 87 bzw. 88 bestehen jeweils aus einer Vielzahl zueinander paralleler Netzstränge 89 bzw. 90.

Der in Figur 7 teilweise dargestellte Randgurt 85 ist, wie sich aus seiner Schnittdarstellung in Figur 8 ergibt, als Hohlschlauch 91 ausgebildet. Der als Hohlschlauch 91 ausgebildete Randgurt 85 kann sich je nach Ausführungsform des Haltenetzes 1 über einen Teil des Randes 86 des Haltenetzes 1 oder aber über den gesamten Rand 86 des Haltenetzes 1 erstrecken.

Der als Hohlschlauch 91 ausgebildete Randgurt 85 ist aus demselben Werkstoff ausgebildet wie das elastische Netzgeflecht 84. Der Randgurt 85 bzw. Hohlschlauch 91 wird im selben Arbeitsgang mit der Herstellung des Netzgeflechts 84 an ihm zugeordnete Strangenden 92, 93 der Netzstränge 89 bzw. 90 der Strangscharen 87 bzw. 88 angewebt bzw. angehäkelt. Die Herstellung des Netzgeflechts 84 und des den Rand 86 des Haltenetzes 1 zumindest teilweise bildenden, als Hohlschlauch 91 ausgebildeten Randgurts 85 erfolgt somit in einem Arbeitsgang, wobei die Erstellung des Hohlschlauches 91 als Hohlschlauch erfolgt, ohne daß nach Beendigung des Herstellungsvorgangs des Haltenetzes 1 der Randgurt 85 umgelegt und mittels einer Naht zu einem Hohlschlauch umgearbeitet werden müßte.

Bei einer beispielhaften Ausführungsform weist das Haltenetz 1 an einem vorzugsweise oberen Randabschnitt den als Hohlschlauch 91 ausgebildeten Randgurt 85 auf. Am übrigen Rand 86 des Haltenetzes 1 ist dieses in geeigneter Weise an der Innenseite einer Fahrzeugtür befestigt. In dem als Hohlschlauch 91 ausgebildeten Randgurt 85, in dessen Bereich der Rand 86 des Haltenetzes 1 nicht an der Innenseite der Fahrzeugtür befestigt ist, ist ein in den Figuren nicht dargestellter Metallstab oder ein ähnlicher stabförmiger Gegenstand eingeschoben. Der Metallstab erstreckt sich quasi über den gesamten als Hohlschlauch 91 ausgebildeten Randgurt 85.

Wenn zum Schließen der Fahrzeugtür nicht ein dafür vorgesehener Griff, sondern der nicht mit der Innenseite der Fahrzeugtür fest verbundene Bereich des Randes 86 des Haltenetzes 1 ergriffen und zum Fahrzeuginneren hin gezogen wird, kann ein derartiger, an sich nicht vorgesehener Vorgang realisiert werden, ohne daß Beschädigungen am Haltenetz 1 oder an der Innenseite der Fahrzeugtür auftreten.

Hierzu kann der in den Figuren nicht dargestellte Metallstab an einem Endabschnitt ein Langloch aufweisen, welches verschieblich mit einem auf der Innenseite der Fahrzeugtür angeordneten Haltebolzen in Eingriff ist, wobei hierdurch der Metallstab in bezug auf den Haltebolzen in seiner Längsrichtung verschieblich ist. Am nicht mit dem Langloch versehenen anderen Ende ist der Metallstab in geeigneter Weise an der Innenseite der Fahrzeugtür angebracht.

Alternativ ist es möglich, daß der Metallstab an beiden Enden mittels einer Feder mit der Innenseite der Fahrzeugtür verbunden ist, wobei die Feder in Schließrichtung des Haltenetzes 1 vorgespannt ist.

Bei einer weiteren Ausführungsform des erfindungsgemäßen Haltenetzes 1 ist dessen gesamter Rand 86 mit dem als Hohlschlauch 91 ausgebildeten Randgurt 85 versehen. In diesem Randgurt 85 bzw. Hohlschlauch 91 ist ein entsprechend der Randkontur des Haltenetzes 1 geformter ein- oder mehrteiliger Stab eingeschoben. Des weiteren sind am Rand 86 des Haltenetzes 1 bzw. an dessen Randgurt Clipsverbindungselemente vorgesehen, die mit mit an einem Fahrzeugboden entsprechend vorgesehenen Gegenclipselementen in Eingriff bringbar sind. Wenn nun auf dem Fahrzeugboden Gepäckstücke od.dgl. positioniert werden und das Haltenetz 1 oberhalb dieser Gepäckstücke positioniert wird, können die haltenetzseitigen Clipsverbindungen mit den fahrzeugbodenseitigen Clipsverbindungen in Eingriff gebracht werden, wobei aufgrund der Verstarrung des sich über den gesamten Rand 86 des Haltenetzes 1 erstreckenden Randgurts 85 mittels des entsprechend geformten Stabs verhindert wird, daß zwischen dem Fahrzeugboden und dem Rand 86 des Haltenetzes 1 Lücken entstehen. Hierdurch kann eine zuverlässigere Fixierung von Gepäckstücken an der dafür vorgesehenen Aufnahmefläche erreicht werden.

Das erfindungsgemäße Haltenetz 1 ist mit einem vergleichsweise geringen Herstellungsaufwand in einem Herstellungsschritt herstellbar, wobei während dieses einen Herstellungsschritts sowohl das Netzgeflecht 84 als auch der daran angewebte bzw. angehäkelte, als Hohlschlauch 91 ausgebildete Randgurt 85 hergestellt werden.

## Patentansprüche

1. Haltenetz mit einem Netzteil bzw. Netzgeflecht (3; 19; 37; 56; 84), das durch zueinander geneigt verlaufende, jeweils mehrere Netzstränge aufweisende Strangscharen gebildet ist, und einem Rand, der zumindest teilweise durch einen Randgurt (13, 15; 24, 25; 45; 57, 58; 85) gebildet ist, wobei der den Rand des Haltenetzes (1) zumindest teilweise ausbildende Randgurt (13, 15; 24, 25; 45; 57, 58; 85) aus demselben Werkstoff wie das Netzteil bzw. Netzgeflecht (3; 19; 37; 56; 84) ausgebildet ist **dadurch gekennzeichnet, daß** an dem Rand des Haltenetzes zugeordnete Strangenden der Strangscharen angewebt bzw. angehäkelt sind.

2. Haltenetz nach Anspruch 1, z.B. Bodennetz für Kraftfahrzeuge od.dgl., mit einem umlaufenden Rand (4), der an Kanten (5, 6, 7, 8) des Netzteils (3) angeordnet ist, wobei an zwei einander gegenüberliegenden und zueinander parallelen Kanten (5, 7) des Netzteils (3) zwei Randgurte (13, 15) angeordnet sind, die aus demselben Werkstoff wie das Netzteil (3) ausgebildet und an die die jeweilige Kante (5, 7) des Netzteils (3) bildenden Strangenden (17, 18) angewebt bzw. angehäkelt sind, und daß an den anderen Kanten (6, 8) des Netzteils (3) jeweils ein Randgurt (14, 16) angeordnet ist, der aus demselben Werkstoff wie das Netzteil (3) ausgebildet, an die die jeweilige Kante (6, S) des Netzteils (3) bildenden Strangenden (17, 18) angenäht und an seinen Enden mit den ihm zugewandten Enden ihm benachbarter Randgurte (14, 16) verbunden ist.

3. Haltenetz nach Anspruch 1 oder 2, das aus Polypropylen oder Polyamid ausgebildet ist.

4. Haltenetz nach einem der Ansprüche 1 bis 3, dessen Randgurte (13, 14, 15, 16) beliebig breit ausgestaltbar sind.

5. Haltenetz nach einem der Ansprüche 1 bis 4, das viereckig ausgebildet ist.

6. Haltenetz nach einem der Ansprüche 1 bis 5, das trapezförmig ausgebildet ist.

7. Haltenetz nach einem der Ansprüche 1 bis 5, das rechtekkig ausgebildet ist.

8. Haltenetz nach einem der Ansprüche 1 bis 5, das quadratisch ausgebildet ist.

9. Haltenetz nach einem der Ansprüche 2 bis 8, das zwei miteinander mittels eines ihnen gemeinsamen Randgurts (15) verbundene, in bezug auf den ihnen gemeinsamen Randgurt (15) symmetrische Netzteile (3) aufweist, die außer an den zu dem ihnen gemeinsamen Randgurt (15) parallelen Randgurten (13) an ihren weiteren Randgurten (14, 16) miteinander verbunden sind.

10. Haltenetz nach einem der Ansprüche 2 bis 8, das zumindest drei Netzteile aufweist, von denen jeweils zwei Netzteile mittels eines diesen beiden Netzteilen gemeinsamen Randgurts verbunden sind, wobei ein mittleres Netzteil zu seiner Mittelachse symmetrisch ausgebildet ist oder zwei mittlere Netzteile zum ihnen gemeinsamen Randgurt symmetrisch sind, wobei auf der einen Seite des oder der mittleren Netzteile sukzessive folgende Netzteile zu den auf der anderen Seite des oder der mittleren Netzteile sukzessive folgenden, ihnen jeweils zugeordneten Netzteilen symmetrisch sind, und wobei die beim Falten des Haltenetzes um die Mittelachse des mittleren Netzteils oder den den beiden mittleren Netzteilen gemeinsamen Randgurt übereinander geratenden, jeweils nur einem Netzteil zugeordneten und nicht zur Mittelachse des mittleren Netzteils bzw. zum den beiden mittleren Netzteilen gemeinsamen Randgurt parallelen Randgurte miteinander verbunden sind.

11. Haltenetz nach einem der Ansprüche 2 bis 8, das vorzugsweise bzw. zumindest an jeder seiner Ecken mit einem Halte- bzw. Klemmelement (2) versehen ist, mittels dem es an einer Aufnahmefläche fixierbar ist.

12. Haltenetz nach Anspruch 11, dessen Halte- bzw. Klemmelemente (2) als Hakenteile ausgebildet sind.

13. Haltenetz nach einem der Ansprüche 1 bis 12, dessen Netzteil (3) und/oder umlaufender Rand (4) elastisch ausgebildet ist bzw. sind.

14. Haltenetz nach Anspruch 1, das an zwei einander gegenüberliegenden und zueinander parallelen Seiten jeweils einen Randgurt (24, 25) aufweist, wobei das Netzteil (19) zumindest einen Mittelgurt (30, 31, 32) aufweist, der mit Abstand und parallel zu den beiden Randgurten (24, 25) im Netzteil (19) angeordnet ist, und jeder Mittel- (30, 31, 32) und Randgurt (24, 25) aus demselben Werkstoff wie das übrige Netzteil (19) ausgebildet und an ihm zugewandte Strangenden (33, 34) der Netzstränge (28, 29) der Strangscharen (26, 27) angewebt bzw. angehäkelt ist.

15. Haltenetz nach Anspruch 14, das aus Polypropylen oder Polyamid ausgebildet ist.

16. Haltenetz nach Anspruch 14 oder 15, dessen Rand- (24, 25) und/oder Mittelgurte (30, 31, 32) beliebig breit ausgestaltbar sind.

17. Haltenetz nach einem der Ansprüche 14 bis 16, bei dem jeder Mittelgurt (30, 31, 32) zu den ihm benachbarten Rand- (24, 25) und/oder Mittelgurten (30, 31, 32) denselben Abstand aufweist.

18. Haltenetz nach einem der Ansprüche 14 bis 17, das drei Mittelgurte (30, 31, 32) aufweist.

19. Haltenetz nach einem der Ansprüche 14 bis 18, bei dem jeder Mittel- (30, 31, 32) und Randgurt (24, 25) dieselbe Breite aufweist.

20. Haltenetz nach einem der Ansprüche 14 bis 19, das rechteckige, quadratische, waben- oder rautenförmige Netzmaschen (35) aufweist.

21. Haltenetz nach Anspruch 1, das zur Anbringung an einer Befestigungsfläche auf einer Rückseite einer Sitzlehne, an einer Wand- oder Deckenfläche od.dgl, vorgesehen ist, mit einem vergleichsweise starren Rahmenelement (36), das an der Befestigungsfläche anbringbar ist, wobei das Netzteil (37) elastisch ausgebildet ist, eine freie Kante (44) aufweist, an seinen weiteren Kanten (41, 42, 43) am Rahmenelement (36) gehalten ist und an seiner freien Kante (44) den Randgurt (45) aufweist, der aus demselben Werkstoff wie das übrige Netzteil (37) ausgebildet und an der freien Kante (44) des Netzteils (37) zugeordneten Strangenden (50, 51) der Netzstränge (48, 49) der Strangscharen (46, 47) angewebt bzw. angehäkelt ist.

22. Haltenetz nach Anspruch 21, dessen Netzteil (37) aus Propylen oder Polyamid ausgebildet ist.

23. Haltenetz nach Anspruch 21 oder 22, dessen die freie Kante (44) des Netzteils (37) ausbildender Randgurt (45) beliebig breit ausgestaltbar ist.

24. Haltenetz nach einem der Ansprüche 21 bis 23, bei dem der die freie Kante (44) des Netzteils (37) ausbildende Randgurt (45) an seinen beiden Enden am Rahmenelement (36) fixiert ist.

25. Haltenetz nach Anspruch 24, bei dem der Randgurt (45) an seinen beiden Enden mittels Klammern am Rahmenelement (36) fixiert ist.

26. Haltenetz nach einem der Ansprüche 21 bis 25, bei dem das Rahmenelement (36) eine U-förmige Grundgestalt mit einer Basis (38) und zwei Schenkeln (39, 40) aufweist, zwischen deren freien Enden sich der Randgurt (45) des Netzteils (37) erstreckt.

27. Haltenetz nach einem der Ansprüche 21 bis 26, bei dem die Kontur des Rahmenelements (36) an die der es aufnehmenden Befestigungsfläche angepaßt ist.

28. Haltenetz nach einem der Ansprüche 21 bis 27, bei dem am Rahmenelement (36) angeordnete Randmaschen (52, 53, 54) des Netzteils (37) von einem Kantenelement durchsetzt sind, das seinerseits am Rahmenelement (36) fixiert ist.

29. Haltenetz nach Anspruch 28, bei dem sich das Kantenelement über alle am Rahmenelement (36) angeordnete Kanten (41, 42, 43) des Netzteils (37) erstrecke und in am Rahmenelement (36) ausgebildete Clipsaufnahmen einklemmbar ist.

30. Haltenetz nach Anspruch 1, das als Halteschleife (55) zum Aufziehen auf einen stab-, stangen-, walzenförmigen oder ähnlich gestalteten Körper, z.B. auf eine Sonnen- bzw. Lichtblende eines Kraftfahrzeugs, und zum Fixieren von Gegenständen, z.B. von Schreibutensilien, Mautkarten, Handys, Funksendern, Lebensmitteln od.dgl. an diesem Körper, ausgebildet ist und zwei Randgurte (57, 58) aufweist, die an den beiden Längsseiten des Netzteils (56) an ihren dem Netzteil (56) zugewandten Innenrändern (65, 66) an diesen zugewandte Strangenden (67, 68) der Netz-Stränge (60, 61) der Strangscharen (62, 63) angewebt bzw. angehäkelt sind, wobei das Netzteil (56) und die beiden Randgurte (57, 58) aus demselben Werkstoff hergestellt sind.

31. Haltenetz bzw. Halteschleife nach Anspruch 30, mit einem Verbindungsglied (59), mittels dem die beiden Stirnenden (71, 72; 69, 70, 73, 74) des Netzteils (56), des ersten Randgurts (57) und des zweiten Randgurts (53) jeweils miteinander verbunden sind.

32. Haltenetz bzw. Halteschleife nach Anspruch 30 oder 31, deren Hetzteil (56) quadratische, rechteckige, waben- oder rautenförmige Netzmaschen (64) aufweist.

33. Haltenetz bzw. Halteschleife nach Anspruch 31 oder 32, bei dem bzw. der das Netzteil (56), die beiden Randgurte (57, 58) und das Verbindungsglied (59) aus demselben Werkstoff hergestellt sind.

34. Haltenetz bzw. Halteschleife nach einem der Ansprüche 30 bis 33, die aus Polypropylen oder Polyamid ausgebildet ist.

35. Haltenetz bzw. Halteschleife nach einem der Ansprüche 30 bis 34, deren Randgurte (57, 59) beliebig breit ausgestaltbar, vorzugsweise gleich breit sind.

36. Haltenetz bzw. Halteschleife nach einem der Ansprüche 31 bis 35, bei der das Verbindungsglied (59) an seinen beiden den Stirnenden (71, 72; 69, 70; 73, 74) des Netzteils (56) und der Randgurte (57, 58) zugewandten Seiten mit den diesen zugewandten Strangenden (67, 68) der Netzstränge (60, 61) der Strangscharen (62, 63) und den Stirnenden (69, 70; 73, 74) der Randgurte (57, 58) vernäht ist.

37. Haltenetz bzw. Halteschleife nach einem der Ansprüche 31 bis 36, bei der die Außenränder (75, 76) des Verbindungsglieds (59) mit den Außenrändern (77, 78) der Randgurte (57, 58) fluchten.

38. Haltenetz bzw. Halteschleife nach einem der Ansprüche 31 bis 37, deren Verbindungsglied (59) als Gurtband ausgebildet ist.

39. Haltenetz bzw. Halteschleife nach einem der Ansprüche 31 bis 38, auf deren Verbindungsglied (59) ein Halteelement (79) angebracht ist, das in eine Öffnungs- und beliebige Schließstellungen bringbar ist.

40. Haltenetz bzw. Halteschleife nach Anspruch 39, bei dem bzw. der das Halteelement (79) Klettbandfelder (82, 83) aufweist, die in einer Vielzahl von Schließstellungen miteinander in Eingriff bringbar sind.

41. Haltenetz nach Anspruch 1, insbesondere für Kraftfahrzeuge, dessen als Hohlschlauch (91) ausgebildeter Randgurt (85) aus demselben Werkstoff wie das Netzgeflecht (84) ausgebildet und an ihm zugeordnete Strangenden (92, 93) der Netzstränge (89, 90) der Strangscharen (87, 88) des Netzgeflechts (84) angewebt bzw. angehäkelt ist, wobei in den als Hohlschlauch (91) ausgebildeten Randgurt (85) ein Stab od.dgl. einführbar ist.

42. Haltenetz nach Anspruch 41, das an seinem nicht mit dem Randgurt (85) versehenen Außenrand an der Innenseite einer Fahrzeugtür befestigt ist und bei dem in den als Hohlschlauch (91) ausgebildeten Randgurt (85) ein Metallstab od.dgl. eingeschoben ist.

43. Haltenetz nach Anspruch 42, bei dem der im Hohlschlauch (91) angeordnete Metallstab od.dgl. an einem Endabschnitt ein Langloch aufweist, welches in Längsrichtung des Metallstabs od.dgl. verschieblich mit einem Haltebolzen in Eingriff ist.

44. Haltenetz nach Anspruch 42, bei dem der im Hohlschlauch (91) angeordnete Metallstab od.dgl. an zumindest einem Ende, vorzugsweise an beiden Enden, mittels einer in Schließrichtung des Haltenetzes (1) vorgespannten Feder mit der Innenseite der Fahrzeugtür verbunden ist.

45. Haltenetz nach Anspruch 41, bei dem sich der als Hohlschlauch (91) ausgebildete Randgurt (85) über den gesamten Rand (86) des Netzgeflechts (84) erstreckt, wobei im Randgurt (85) ein entsprechend der Randkontur des Haltenetzes (1) ausgebildeter ein- oder mehrteiliger Stab angeordnet ist, und der Randgurt (85) Clipsverbindungselemente zur Anbringung des Haltenetzes (1) an einer Aufnahmefläche, z.B. in einem Kraftfahrzeug, aufweist.

46. Haltenetz nach einem der Ansprüche 1 bis 45, bei dem alle Rand- und/oder Mittelgurte und das Netzteil bzw. Netzgeflecht aus einem elastischen Werkstoff ausgebildet sind.

47. Verfahren zur Herstellung eines Haltenetzes mit einem Netzteil bzw. Netzgeflecht (3; 19; 37; 56; 84), das durch zueinander geneigt verlaufende, jeweils mehrere Netzstränge aufweisende Strangscharen gebildet ist, und einem Rand, der zumindest teilweise durch einen Randgurt (13; 15; 24; 25; 45; 57; 58; 85) gebildet ist, wobei der den Rand des Haltenetzes (1) zumindest teilweise ausbildende Randgurt (13; 15; 24; 25; 45; 57; 58; 85) aus demselben Werkstoff wie das Netzteil bzw. Netzgeflecht (3; 19; 37; 56; 84) hergestellt wird, **dadurch gekennzeichnet, daß** an dem Rand des Haltenetzes zugeordnete Strangenden der Strangscharen angewebt bzw. angehäkelt werden.

## Claims

1. Holding net with a net part or netting (3; 19; 37; 56; 84), which is formed by strand groups extending obliquely to one another and each comprising a plurality of net strands, and a periphery, which is formed at least partly by a peripheral strap (13, 15; 24, 25; 45; 57, 58; 85), wherein the peripheral strap (13, 15; 24, 25; 45; 57, 58; 85) which at least partly forms the periphery of the holding net (1) is formed from the same material as the net part or netting (3; 19; 37; 56; 84), **characterised in that** strand ends, which are associated with the periphery of the holding net, of the strand groups are woven or hooked on.

2. Holding net according to Claim 1, e.g. floor net for motor vehicles or similar, with a circulating periphery (4), which is disposed at edges (5, 6, 7, 8) of the net part (3), wherein two peripheral straps (13, 15) are disposed at two edges (5, 7) of the net part (3) which lie opposite and parallel to one another, which straps are formed from the same material as the net part (3) and onto which strand ends (17, 18) forming the respective edge (5, 7) of the net part (3) are woven or hooked, and that a respective peripheral strap (14) is disposed at the other edges (6, 8) of the net part (3), which strap is formed from the same material as the net part (3), onto which straps strand ends (17, 18) forming the respective edge (6, 8) of the net part (3) are sewn and each of which is connected at its ends to the ends, which face it, of adjacent peripheral straps (14, 16).

3. Holding net according to Claim 1 or 2, which is formed from polypropylene or polyamide.

4. Holding net according to any one of Claims 1 to 3, the peripheral straps (13, 14, 15, 16) of which can be of any desired width.

5. Holding net according to any one of Claims 1 to 4, which is quadrangular.

6. Holding net according to any one of Claims 1 to 5, which is trapezoidal.

7. Holding net according to any one of Claims 1 to 5, which is rectangular.

8. Holding net according to any one of Claims 1 to 5, which is square.

9. Holding net according to any one of Claims 2 to 8, which comprises two net parts (3), which are connected together by means of a peripheral strap (15) common to them, are symmetrical in relation to the peripheral strap common to them and, in addition to being connected together at the peripheral straps (13) parallel to the peripheral strap (15) common to them, are connected together at their other peripheral straps (14, 16).

10. Holding net according to any one of Claims 2 to 8, which comprises at least three net parts, two net parts of which are in each case connected by means of a peripheral strap common to these two net parts, wherein a central net part is formed so as to be symmetrical about its centre axis or two central net parts are symmetrical about the peripheral strap common to them, wherein on one side of the central net part(s) successive following net parts are symmetrical about the net parts successively following on the other side of the central net part(s) and in each case associated with them, and wherein the parallel peripheral straps which are superimposed upon folding the holding net about the centre axis of the central net part or the peripheral strap common to the two central net parts and are in each case only associated with one net part and not common to the centre axis of the central net part or to the peripheral strap common to the two central net parts are connected together.

11. Holding net according to any one of Claims 2 to 8, which is preferably or at least provided at each of its corners with a holding or clamping element (2), by means of which it can be fixed to a mounting surface.

12. Holding net according to Claim 11, the holding or clamping elements (2) of which are formed as hook parts.

13. Holding net according to any one of Claims 1 to 12, the net part (3) and/or circulating periphery (4) of which is or are elastic.

14. Holding net according to Claim 1, which comprises at two mutually opposite and parallel sides a respective peripheral strap (24, 25), wherein the net part (19) comprises at least one centre strap (30, 31, 32), which is disposed at a spacing from and parallel to the two peripheral straps (24, 25) in the net part (19), and each centre strap (30, 31, 32) and peripheral strap (24, 25) is formed from the same material as the rest of the net part (19) and is woven or hooked on at strand ends (33, 34), which face it, of the net strands (28, 29) of the strand groups (26, 27).

15. Holding net according to Claim 14, which is formed from polypropylene or polyamide.

16. Holding net according to Claim 14 or 15, the peripheral straps (24, 25) and/or centre straps (30, 31, 32) of which can be of any desired width.

17. Holding net according to any one of Claims 14 to 16, in which each centre strap (30, 31, 32) is at the same spacing from the peripheral straps (24, 25) and/or centre straps (30, 31, 32) which are adjacent thereto.

18. Holding net according to any one of Claims 14 to 17, which comprises three centre straps (30, 31, 32).

19. Holding net according to any one of Claims 14 to 18, in which each centre strap (30, 31, 32) and peripheral strap (24, 25) are of the same width.

20. Holding net according to any one of Claims 14 to 19, which comprises rectangular, square, honeycombed or diamond-shaped net meshes (35).

21. Holding net according to Claim 1, which is intended for fitting to an attachment surface on a rear face of a seat back, to a wall surface or ceiling surface or similar, with a comparatively rigid frame element (36), which is formed so that it can be fitted to the attachment surface, wherein the net part (37) is elastic, comprises a free edge (44), is secured to the frame element (36) at its other edges (41, 42, 43) and comprises the peripheral strap (45) at its free edge (44), which strap is formed from the same material as the rest of the net part (37) and is woven or hooked on at strand ends (50, 51), associated with the free edge (44) of the net part (37), of the net strands (48, 49) of the strand groups (46, 47).

22. Holding net according to Claim 21, the net part (37) of which is formed from propylene or polyamide.

23. Holding net according to Claim 21 or 22, whose peripheral strap (45) which forms the free edge (44) of the net part (37) can be of any desired width.

24. Holding net according to any one of Claims 21 to 23, in which the peripheral strap (45) which forms the free edge (44) of the net part (37) is fixed to the frame element (36) at both of its ends.

25. Holding net according to Claim 24, in which the peripheral strap (45) is fixed to the frame element (36) at both of its ends by means of clips.

26. Holding net according to any one of Claims 21 to 25, in which the frame element (36) has a U-shaped basic structure with a base (38) and two legs (39, 40), between the free ends of which the peripheral strap (45) of the net part (37) extends.

27. Holding net according to any one of Claims 21 to 26, in which the contour of the frame element (36) is adapted to that of the attachment surface which accommodates it.

28. Holding net according to any one of Claims 21 to 27, in which peripheral meshes (52, 53, 54) of the net part (37) which are disposed at the frame element (36) are penetrated by an edge element which in turn is fixed to the frame element (36).

29. Holding net according to Claim 28, in which the edge element extends over all the edges (41, 42, 43) of the net part (37) which are disposed at the frame element (36) and can be clamped in clip holders formed at the frame element (36).

30. Holding net according to Claim 1, which is formed as a holding loop (55) for drawing onto a rod-shaped, bar-shaped, cylindrical or similarly structured body, e.g. onto a sun visor or light shield of a motor vehicle, and for fixing objects, e.g. writing implements, toll tickets, mobile phones, radio transmitters, food or similar to this body, and comprises two peripheral straps (57, 58) which are woven or hooked on at the two longitudinal sides of the net part (56) at their inner peripheries (65, 66), which face the net part (56), at strand ends (67, 68), which face these, of the net strands (60, 61) of the strand groups (62, 63), wherein the net part (56) and the two peripheral straps (57, 58) are made of the same material.

31. Holding net or holding loop according to Claim 30, with a connecting member (59), by means of which the two front ends (71, 72; 69, 70, 73, 74) of the net part (56), of the first peripheral strap (57) and of the second peripheral strap (58) are in each case connected together.

32. Holding net or holding loop according to Claim 30 or 31, the net part (56) of which comprises square, rectangular, honeycombed or diamond-shaped net meshes (64).

33. Holding net or holding loop according to Claim 31 or 32, in which the net part (56), the two peripheral straps (57, 58) and the connecting member (59) are made of the same material.

34. Holding net or holding loop according to any one of Claims 30 to 33, which is formed from polypropylene or polyamide.

35. Holding net or holding loop according to any one of Claims 30 to 34, the peripheral straps (57, 58) of which can be of any desired width, preferably being of the same width.

36. Holding net or holding loop according to any one of Claims 31 to 35, in which the connecting member (59) is sewn at its two sides which face the front ends (71, 72; 69, 70; 73, 74) of the net part (56) and of the peripheral straps (57, 58) to the strand ends (67, 68), which face these, of the net strands (60, 61) of the strand groups (62, 63) and the front ends (69, 70; 73, 74) of the peripheral straps (57, 58).

37. Holding net or holding loop according to any one of Claims 31 to 36, in which the outer peripheries (75, 76) of the connecting member (59) are aligned with the outer peripheries (77, 78) of the peripheral straps (57, 58).

38. Holding net or holding loop according to any one of Claims 31 to 37, the connecting member (59) of which is formed as webbing.

39. Holding net or holding loop according to any one of Claims 31 to 38, to the connecting member (59) of which a holding element (79) is fitted, which element can be brought into an open position and any desired closed positions.

40. Holding net or holding loop according to Claim 39, in which the holding element (79) comprises Velcro tape areas (82, 83), which can be engaged with one another in a plurality of closed positions.

41. Holding net according to Claim 1, in particular for motor vehicles, whose peripheral strap (85) which is formed as a hollow tube (91) is formed from the same material as the netting (84) and is woven or hooked on at strand ends (92, 93), associated with it, of the net strands (89, 90) of the strand groups (87, 88) of the netting (84), wherein a rod or similar can be introduced into the peripheral strap (85) which is formed as a hollow tube (91).

42. Holding net according to Claim 41, which is attached at its outer periphery which is not provided with the peripheral strap (85) to the inside of a vehicle door, and in which a metal rod or similar is pushed into the peripheral strap (85) which is formed as a hollow tube (91).

43. Holding net according to Claim 42, in which the metal rod or similar which is disposed in the hollow tube comprises at an end section an oblong hole which is engaged with a retention pin so as to be displaceable in the longitudinal direction of the metal rod or similar.

44. Holding net according to Claim 42, in which the metal rod or similar which is disposed in the hollow tube (91) is connected at least at one end, preferably at both ends, to the inside of the vehicle door by means of a spring which is preloaded in the closing direction of the holding net (1).

45. Holding net according to Claim 41, in which the peripheral strap (85) which is formed as a hollow tube (91) extends over the entire periphery (86) of the netting (84), wherein a one-part or multi-part rod, which is formed to correspond to the peripheral contour of the holding net (1), and the peripheral strap (85) comprises clip connecting elements for fitting the holding net (1) to a mounting surface, e.g. in a motor vehicle.

46. Holding net according to any one of Claims 1 to 45, in which all the peripheral straps and/or centre straps and the net part or netting are formed from an elastic material.

47. Method for producing a holding net with a net part or netting (3; 19; 37; 56; 84), which is formed by strand groups extending obliquely to one another and each comprising a plurality of net strands, and a periphery, which is formed at least partly by a peripheral strap (13; 15; 24, 25; 45; 57, 58; 85), wherein the peripheral strap 13; 15; 24, 25; 45; 57, 58; 85) which at least partly forms the periphery of the holding net (1) is made of the same material as the net part or netting (3; 19; 37; 56; 84), **characterised in that** strand ends, which are associated with the periphery of the holding net, of the strand groups are woven or hooked on.

## Revendications

1. Filet de retenue comprenant une nappe de ou un treillis de filet (3 ; 19 ; 37 ; 56 ; 84), qui est formée de groupes de tresses mutuellement inclinés avec chacun plusieurs tresses de filet, et une bordure, qui est au moins partiellement formée d'une bande de bord (13, 15 ; 24, 25 ; 45, 47 ; 57, 58 ; 85), la bande de bordure (13, 15 ; 24, 25 ; 45, 47 ; 57, 58 ; 85) qui constitue au moins partiellement la bordure du filet de retenue (1) étant réalisée en la même matière que la nappe de filet ou le treillis de filet (3 ; 19 ; 37 ; 56 ; 84), **caractérisé en ce que** les extrémités de tresse concernées des groupes de tresses sont liées par tissage ou par tricotage à la bordure du filet de retenue.

2. Filet de retenue selon la revendication 1, par exemple filet de plancher pour véhicules automobiles ou similaires, comportant une bordure (4) continue qui est disposée le long de bords (5, 6, 7, 8) de la nappe de filet (3), deux bandes de bordure (13, 15) étant disposées sur deux bords (5, 7) mutuellement en vis-à-vis et mutuellement parallèles de la nappe de filet (3), lesquelles bandes de bordure sont réalisées en la même matière que la nappe de filet (3) et sont liées par tissage ou par tricotage aux extrémités de tresses (17, 18) qui forment le bord (5, 7) concerné de la nappe de filet (3), et dans lequel sur les autres bords (6, 8) de la nappe de filet (3) est disposée chaque fois une bande de bordure (14, 16) réalisée en la même matière que la nappe de filet (3), à laquelle les extrémités de tresses (17, 18) qui forme le bord (6, 8) concerné sont liées par couture, et qui est liée au niveau de ses extrémités aux extrémités correspondantes des bandes de bordure (14, 106) voisines.

3. Filet de retenue selon la revendication 1 ou 2, réalisé en polypropylène ou en polyamide.

4. Filet de retenue selon une des revendications 1 à 3, dont les bandes de bordure (13, 14, 15, 16) peuvent être réalisées en une largeur quelconque.

5. Filet de retenue selon une des revendications 1 à 4, qui a une forme de quadrilatère.

6. Filet de retenue selon une des revendications 1 à 5, qui a une forme de trapèze.

7. Filet de retenue selon une des revendications 1 à 5, qui a une forme de rectangle.

8. Filet de retenue selon une des revendications 1 à 5, qui a une forme de carré.

9. Filet de retenue selon une des revendications 2 à 8, comportant deux nappes de filet (3) qui sont liées entre elles par une bande de bordure (15) commune et sont symétriques par rapport à ladite bande de bordure (15) commune, et qui, sauf en ce qui concerne leurs bandes de bordure (13) parallèles à la bande de bordure (15) commune, sont liées entre elles par leurs autres bandes de bordure (14, 16).

10. Filet de retenue selon une des revendications 2 à 8, comportant au moins trois nappes de filet, parmi lesquelles deux nappes de filet sont liées par une bande de bordure commune auxdites deux nappes de filet, dans lequel une nappe de filet médiane présente une symétrie par rapport à son axe médian ou deux nappes de filet médianes sont symétriques par rapport à leur bande de bordure commune, dans lequel les nappes de filet successives placées d'un côté de la ou des nappes de filet médianes sont symétriques des nappes successives correspondantes placées de l'autre côté de la ou des nappes de filet médianes, et dans lequel les bandes de bordure, qui, lors du pliage du filet de retenue autour de l'axe médian de la nappe de filet médiane ou de la bande de bordure commune aux deux nappes de filet médianes, sont appliquées l'une sur l'autre, sont associées seulement à une nappe de filet et ne sont pas liées aux bandes de bordure parallèles à l'axe médian de la nappe médiane ou à la bande de bordure commune aux deux nappes médianes.

11. Filet de retenue selon une des revendications 2 à 8, qui est pourvu de préférence ou d'au moins un élément de fixation ou de blocage (2) dans chacun de ses angles, à l'aide desquels il peut être fixé à une surface réceptrice.

12. Filet de retenue selon la revendication 11, dont les éléments de fixation ou de blocage (2) sont conformés en crochets.

13. Filet de retenue selon une des revendications 1 à 12, dont la nappe de filet (3) et/ou la bordure (4) continue est/sont élastique(s).

14. Filet de retenue selon la revendication 1, comportant une bande de bordure (24, 25) sur deux côtés en vis-à-vis et mutuellement parallèles, dans lequel la nappe de filet (19) comprend au moins une bande intermédiaire (30, 31, 32), qui est disposée dans la nappe de filet (19), parallèlement aux deux bandes de bordure (24, 25) et à distance de celles-ci, chaque bande intermédiaire (30, 31, 32) et de bordure (24, 25) étant réalisée en la même matière que le reste de la nappe de filet (19) et étant liée par tissage ou par tricotage aux extrémités de tresse (33, 34) concernées des tresses de filet (28, 29) des groupes de tresses (26, 27).

15. Filet de retenue selon la revendication 14, qui est réalisé en polypropylène ou en polyamide.

16. Filet de retenue selon la revendication 14 ou 15, dont les bandes de bordure (24, 25) et/ou intermédiaires (30, 31, 32) peuvent être réalisées en une largeur quelconque.

17. Filet de retenue selon la revendication 14 à 16, dans lequel chaque bande intermédiaire (30, 31, 32) présente la même distance par rapport aux bandes de bordure (24, 25) et/ou intermédiaires (30, 31, 32) voisines.

18. Filet de retenue selon la revendication 14 à 17, qui comprend trois bandes intermédiaires (30, 31, 32).

19. Filet de retenue selon une des revendications 14 à 18, dans lequel toutes les bandes intermédiaires (30, 31, 32) et de bordure (24, 25) présentent la même largeur.

20. Filet de retenue selon une des revendications 14 à 19, qui présente des mailles de filet (35) rectangulaires, carrées, en forme de nid d'abeille ou en forme de losange.

21. Filet de retenue selon la revendication 1 destiné à être monté sur une surface de fixation sur une face arrière d'un dossier de siège, sur une paroi, sur un plafond ou similaire, avec un élément formant cadre (36), relativement rigide qui peut être monté sur la surface de fixation, dans lequel la nappe de filet (37) est élastique, comporte un bord libre (44), est fixée à l'élément formant cadre (36) au niveau de ses autres bords (41, 42, 43) et présente au niveau de son bord libre (44) une bande de bordure (45) qui est réalisée en la même matière que le reste de la nappe de filet (37) et qui au niveau du bord libre (44) de la nappe de filet (37) est liée par tissage ou par tricotage aux extrémités de tresses (50, 51) concernées des tresses (48, 49) des groupes de tresses (46, 47).

22. Filet de retenue selon la revendication 21, dont la nappe de filet (37) est réalisée en propylène ou en polyamide.

23. Filet de retenue selon la revendication 21 ou 22, dont la bande de bordure (45) formant le bord libre (44) de la nappe de filet (37) peut être réalisée en une largeur quelconque.

24. Filet de retenue selon une des revendications 21 à 23, dans lequel la bande de bordure (45) formant le bord libre (44) de la nappe de filet (37) est fixée à l'élément formant cadre (36) au niveau de ses deux extrémités.

25. Filet de retenue selon la revendication 24, dans lequel la bande de bordure (45) au niveau de ses deux extrémités est fixée par des pinces à l'élément formant cadre (36).

26. Filet de retenue selon une des revendications 21 à 25, dans lequel l'élément formant cadre (36) a une forme de base en U, avec une base (38) et deux branches (39, 40), entre les extrémités libres desquelles s'étend la bande de bordure (45) de la nappe de filet (37).

27. Filet de retenue selon une des revendications 21 à 26, dans lequel le contour de l'élément formant cadre (36) est adapté à celui de la surface de fixation destinée à le recevoir.

28. Filet de retenue selon une des revendications 21 à 27, dans lequel des mailles de bordure (52,53, 54) disposées sur l'élément formant cadre (36) sont traversées par un élément de bord qui lui-même est fixé à l'élément formant cadre (36).

29. Filet de retenue selon la revendication28, dans lequel l'élément de bord s'étend sur tous les bords (41, 42, 43) de la nappe de filet (37) disposés sur l'élément formant cadre (36) et peut être encliqueté dans des dispositifs d'encliquetage aménagés sur l'élément formant cadre (36).

30. Filet de retenue selon la revendication 1, conformé en manchon de retenue (55) à enfiler sur un corps en forme de tige, de barre, de cylindre ou similaire, par exemple sur un pare-soleil d'un véhicule automobile, et servant à tenir des objets, par exemple des ustensiles d'écriture, des cartes de péage, des téléphones cellulaires, des émetteurs radio, des produits alimentaires ou similaires sur ledit corps, qui présente deux bandes de bordure (57, 58) disposées sur les deux grands côtés de la nappe de filet (56) qui, au niveau de leur bord intérieur (65, 66) tourné vers la nappe de filet (56), sont liées par tissage ou par tricotage aux extrémités de tresse (67, 68) des groupes de tresses (62, 63), la nappe de filet (56) et les deux bandes de bordure (57, 58) étant réalisées en la même matière.

31. Filet de retenue ou manchon de retenue selon la revendication 30, comportant une attache (59) à l'aide de laquelle les deux extrémités frontales (71, 72; 69, 70; 73, 74) de la nappe de filet (56) et des première (57) et deuxième (58) bandes de bordure sont liées entre elles.

32. Filet de retenue selon la revendication 30 ou 31, dont la nappe de filet (56) présente des mailles de filet (64) carrées, rectangulaires, en forme de nid d'abeilles ou en forme de losange.

33. Filet de retenue selon la revendication 30 ou 32, dans lequel la nappe de filet (56), les deux bandes de bordure (57, 58) et l'attache (59) sont réalisées en la même matière.

34. Filet de retenue selon une des revendications 30 à 33, qui est réalisé en polypropylène ou en polyamide.

35. Filet de retenue selon une des revendications 30 à 34, dont les bandes de bordure (57, 58) sont réalisées en une largeur quelconque, de préférence de même largeur.

36. Filet de retenue selon une des revendications 31 à 35, dans lequel l'attache (59), au niveau de ses deux côtés tournés vers les extrémités frontales (71, 72; 69, 70; 73, 74) de la nappe de filet (56) et des bandes de bordure (57, 58), est liée par couture aux extrémités de tresse (60, 61) tournées vers ceux-ci des groupes de tresses (62, 63) et aux extrémités frontales (69, 70, 73, 74) des bandes de bordure (57, 58).

37. Filet de retenue selon une des revendications 31 à 36, dans lequel les bords extérieurs (75, 76) de l'attache (59) sont alignés avec les bords extérieurs (77, 78) des bandes de bordure (57, 58).

38. Filet de retenue selon une des revendications 31 à 37, dans lequel l'attache (59) est conformée en sangle.

39. Filet de retenue selon une des revendications 31 à 38, sur l'attache (59) duquel est disposé un élément de fixation (79) qui peut être amené dans une position de fermeture et dans une position d'ouverture.

40. Filet de retenue selon la revendications 39 dans lequel l'élément de fixation (79) présente des zones de ruban auo-agrippant (82, 83) qui peuvent être amenées en prise réciproque dans un grand nombre de positions de fermeture.

41. Filet de retenue selon la revendication 1, destiné en particulier à des véhicules automobiles, dont la bordure (86) formée d'une bande de bordure (85) conformée en gaine creuse (91) est réalisée en la même matière que le treillis de filet (84) et est liée par tissage ou par tricotage aux extrémités de tresse (92, 93) associées des tresses (89, 90) des groupes de tresses (87, 88) du treillis de filet (84), une tige ou similaire étant introduite dans la bande de bordure (85) conformée en gaine creuse (91).

42. Filet de retenue selon la revendication 41, qui au niveau de son bord extérieur ne comportant pas de bande de bordure (85) est fixé à la paroi intérieure d'une portière de voiture et dans lequel une tige métallique ou similaire est introduite dans la bande de bordure (85) conformée en gaine creuse (91).

43. Filet de retenue selon la revendication 42, dans lequel la tige métallique ou similaire introduite dans la gaine creuse (91), dans une partie d'extrémité, est pourvue d'un trou oblong, qui est en prise avec un axe de retenue, avec possibilité de déplacement dans la direction longitudinale de la tige métallique ou similaire.

44. Filet de retenue selon la revendication 42, dans lequel la tige métallique ou similaire introduite dans la gaine creuse (91), à une extrémité au moins, de préférence aux deux extrémités, est liée à la paroi intérieure de la portière de véhicule au moyen d'un ressort précontraint dans la direction de fermeture du filet de retenue (1).

45. Filet de retenue selon la revendication 41, dans lequel la bande de bordure (85) conformée en gaine creuse (91) s'étend sur la totalité du bord (86) du treillis de filet (84), une tige métallique ou similaire en une ou plusieurs parties, de forme adaptée au contour du bord de filet de retenue (1) étant disposée dans la bande de bordure (85) et la bande de bordure (85) présentant des éléments de liaison à encliquetage pour la fixation du filet de retenue (1) sur une surface réceptrice, par exemple dans un véhicule automobile.

46. Filet de retenue selon une des revendications 1 à 45, dans lequel toutes les bandes de bordure et/ou intermédiaires et la nappe de filet ou le treillis de filet sont réalisés en une matière élastique.

47. Procédé de fabrication d'un filet de retenue comportant une nappe de filet ou un treillis de filet (3; 19; 37; 56; 84) qui est formé par des groupes de tresses avec plusieurs tresses de filet mutuellement inclinés, et une bordure qui est au moins partiellement formée par une bande de bordure (13; 15; 4; 25; 45; 57; 58; 85), la bande de bordure (13; 15; 4; 25; 45; 57; 58; 85) qui forme au moins partiellement la bordure du filet de retenue (1) étant réalisée en la même matière que la nappe de filet ou le treillis de filet (3; 19; 37; 56; 84), **caractérisé en ce que** des extrémités de tresse des groupes de tresses associées au bord du filet de retenue sont liées par tissage ou par tricotage à celui-ci.
